# NEW EUROPEAN PATENT SPECIFICATION

(11) **EP 2 300 660 B2**
(45) Date of publication and mention of the opposition decision: **20.04.2022**
(45) Mention of the grant of the patent: 26.03.2014
(21) Application number: 09742187.9
(22) Date of filing: 05.05.2009
(51) Int. Cl.: D21C 9/06, F16J 15/16, B01D 33/06, B01D 33/067, D21D 1/40, D06B 23/18

(54) **METHOD AND ARRANGEMENT FOR IMPROVING THE OPERATION OF SEALING ELEMENTS OF A DRUM WASHER**
VERFAHREN UND ANORDNUNG ZUR VERBESSERUNG DER FUNKTION VON DICHTELEMENTEN EINES TROMMELWÄSCHERS
PROCÉDÉ ET DISPOSITIF POUR AMÉLIORER LE FONCTIONNEMENT D'ÉLÉMENTS D'ÉTANCHÉITÉ D'UN TAMBOUR LAVEUR

(30) Priority: 06.05.2008 FI 20080337
(43) Date of publication of application: 30.03.2011
(73) Proprietor: Andritz Oy, 00180 Helsinki (FI)
(72) Inventor: TARJAVUORI, Petri, FIN-57101 Savonlinna (FI); HYTÖNEN, Jarkko, FIN-57101 Savonlinna (FI); LAAMANEN, Kimmo, FIN-57101 Savonlinna (FI)
(74) Representative: Hoffmann Eitle
(86) International application number: PCT/FI2009/000056
(87) International publication number: WO 2009/135987

(56) References cited:
- WO-A-2006/130096
- WO-A-2006/130108
- WO-A-2006/130109
- WO-A1-2006/130109
- US-A- 2 741 369
- US-A- 4 673 496
- US-A1- 2005 051 473

## Description

The invention relates to a method for improving the operation and/or adjustability of sealing elements of a drum washer for washing fiber suspension, said drum washer comprising a cylindrical drum arranged rotatably around its longitudinal axis and adapted inside a stationary housing structure, outside of which drum pulp compartments are arranged for the fiber suspension to be washed, where the pulp compartments are formed on the outer surface of the drum by means of wall members arranged essentially circumferentially and intermediate walls arranged essentially in the axial direction of the drum, whereby the radial outer surfaces of said wall members and intermediate walls form a sealing surface for the pulp compartments, in which drum washer the pulp compartments can be divided into sectorial zones separated from each other and comprising at least one feed zone for introducing the fiber suspension, two or more washing zones for washing the fiber suspension and at least one discharge zone for discharging the fiber suspension, in which drum washer said sealing elements are adapted in a space formed between the housing part and the drum and extend essentially in the axial direction of the drum, and for which sealing elements supporting means are arranged, against which the sealing elements can be supported at least in the radial direction, and which sealing elements are arranged towards the sealing surface of the pulp compartments so that said zones are formable by means of the sealing elements. The invention also relates to an arrangement implementing the method.

A drum washer is a washing apparatus based on displacement principle and it is used especially in the sulfate pulp process for washing off liquor-containing liquid from the chemical pulp. Constructional main parts of a drum washer comprise a cylindrical drum arranged rotatably around its axis and a stationary housing part surrounding the drum radially. The outer surface of the drum circumference is divided into pulp compartments by means of rib-like or corresponding intermediate walls arranged both sectorially and cylindrically. As the drum rotates, these pulp-filled compartment-like, radially open spaces formed on the outer circumference of the drum remain between the space dimensioned between the outer surface of the drum and the housing part. Thus, a pulp compartment is a space that is defined by the axial intermediate walls mounted stationary on the drum and at the ends by the circumferential walls.

The operation of a drum washer as a whole can be divided into three stages. In the feeding stage the pulp to be washed is continuously directed via a feed chamber against the outer circumference of the drum and introduced to form an even mat, filling the pulp compartments. Thus, the fiber suspension forms in the compartments a kind of plank-like pulp cake on the circumference of the drum. Additionally, a first sealing element wiping over the pulp compartments plows off any extra pulp suspension. Thereafter, the liquid used for washing the pulp in the washing stage is fed into the pulp compartments where it permeates the pulp to be washed. By means of pressure difference formed over the filtration surface forming the bottom of a pulp compartment and arranged to be liquid-permeable only the washing liquid is withdrawn through the pulp layer, whereby it simultaneously displaces the fouler liquid in the pulp. The displaced liquid is filtrated through the filtration surface and further into filtrate compartments arranged for it. The foul displaced liquid is finally discharged from the drum via its end. A drum washer can operate according to counter-current principle, i.e. the washing liquid of the first washing stage is obtained from the filtrate of the following washing stage. The washing stage is repeated in the drum depending on the construction of the washer from one to four times. Typically the number of washing stages in modem washers is at least two.

After the washing stages, in the finishing treatment stage the pulp is thickened by means of suction, the pulp cake is removed from the surface of the drum and removed from the drum and the compartments of the drum are cleaned for a new cycle. Used washing liquid is led e.g. to a chemical recovery process. As an example of this kind of drum the so-called DD-washer, i.e. Drum Displacer washer developed by Andritz Oy can be mentioned.

The operation of a drum washer is largely based on pressure difference prevailing over the filtration surface, by means of which the liquid is pressed through the pulp cake. Simultaneously the pressure difference is to compensate the tendency of pulp and liquid to travel out of the pulp compartment into an opposite direction, which is caused by low centripetal acceleration due to the rotation of the drum. However, the significance is small, in the rotational speed range of 0.2-5 r/min, which is typically used for a drum washer. Even largely varying pressure levels are used in a drum washer in the feed of the pulp to be washed, as well as in the feed of the washing liquid, in washing stages and in the discharge, depending on e.g. the quality of the pulp to be washed. Typically, the absolute pressure varies between 1-2 bar. Similarly, temperature differences occur both between various flows and also in time e.g. after start-up of the apparatus. These cause major strain forces to the drum construction and surfaces contacting therewith, which forces alter in amplitude form as a function of angular velocity. Due to the alteration of both the temperature and the pressure, the distance between the outer surfaces of the pulp compartments of the washer and the supporting surfaces arranged for the drum and the sealings may fluctuate even in the range of 2 mm. This sets special requirements especially for sealing arrangements and puts them under stresses that are difficult to control.

Especially this relates to sealing elements separating various washing stages of the washer and the feed and discharge stages. The object of sealing elements is first and foremost to appropriately separate succeeding stages of a drum washer. These stationary elongated sealing elements extend in axial direction in relation to the drum and they are arranged to be situated within the smallest possible distance from the circumferential surface formed by the outer surfaces of the pulp compartments arranged on the outer surface of the drum. From this onwards the circumferential surface is called the sealing surface for the pulp compartments. According to prior art the aim has been to minimize direct contact between this sealing surface and the sealing elements.

A problem of sealing elements and a drum washer in general is to arrange this sealing simultaneously both tight and resistant and to make it flexibly adjustable to changes of the radial location of the surfaces in varying loading conditions. Traditionally the sealing has been implemented in drum washers using a rigid sealing bar formed either as a cast or by welding, which bar comprises a self-sealing plate-like sealing part or sealing element the width of which is at least that of one pulp compartment of the drum, and a rigid support structure supporting the sealing element, which support structure forms kind of a supporting nest for supporting the sealing element. This kind of sealing bar unity is supported to the remaining supporting structure of the washer in the longitudinal direction of the element at regular intervals on either two or three points. The supporting is effected with strict rods which are additionally provided with an adjustment device for basic adjustments of the elements radial position. For the bar solution it is inevitable to provide compartments in the drum frame construction, which are to accommodate the sealing element with its accessories. The tangential supporting of the sealing element is provided by the long sides of the compartment, which support the sealing from the side.

However, this kind of arrangement is not adequate to provide enough flexibility and adaptability in view of changes taking place in the drum's dimensions during the run. Also, it is almost impossible to adapt the sealing element as to its position and in the desired direction to be of appropriate form of curvature for each case, i.e. to crown it. Additionally, this would possibly require the possibility for active adjustment during the run. Instead, said adjustment devices only provide the possibility for linear adjustment of the element, at the most. This inflexibility of the arrangement and extra loading of the sealing surfaces resulting therefrom in some cases lead to loading and defective tightness of both the sealing element and the drum constructions and increasing and even highly uneven wearing and increasing maintenance requirement of the sealing.

Various solutions have also earlier been presented for improving the sealing arrangement. US patent publication 2741369 describes a solution, in which a sealing has been arranged between different zones, where the element 4 can be made of metal, rubber, wood or plastic. Further, for adjusting the radial position of the elements, screw members 20 are arranged, by means of which a stationary basic adjustment can be done. However, the problem remains that the separation element is supported very rigidly and simultaneously the adjustment screws eliminate the possibility of the separation elements to be flexible for radially outward motion. Thereby, possible outward-oriented deformations, especially in view of the drum can cause even intensive abrasion of the separation elements and their compressing against the drum construction. Thus, the arrangement is very inflexible and e.g. if a foreign object is passed between the separation element and the drum, the drum construction and the separation element itself may have to provide all flexibility, whereby there is a danger of instant damage of the sealing surfaces, the separation element and also the drum constructions.

Patent application US 2005/0051473 A1 in its turn discloses a sealing arrangement that is formed of in-series arranged: a sealing layer 132c arranged towards intermediate walls 128a of pulp compartments filled with fiber pulp, a strip 132a adapted behind the sealing layer 132c and after these a sealing membrane 132d, all made of synthetic material. For adjusting the location of the assembly formed of these three elements, a cushion 132e influencing the membrane 132d is arranged, which cushion can be filled with liquid and the size of which is thus adjustable. The element 132e in its turn is supported against a supporting box 132f attached to a covering element 115. The sealing and supporting system is here based on pressing the whole in-series coupled element bundle supported against the supporting box 132f towards the ribs of the drum with a pressure that is adjustable in accordance with the process pressure. However, there is no possibility to efficiently control and restrict the extent of maximum abrasion or even pressing of the whole in-series coupling and the sealing element 132c at the tip thereof against the drum. Correspondingly, there is no way of limiting the force that the sealing element can at worst direct towards the drum, if the distance between the drum and the sealing element is for some reason allowed to decrease uncontrollably. This sealing arrangement of US-A1-2005/0051473 is in accordance with the preamble of claim 1.

Similar devices are also known from WO-A-2006/130108 and WO-A-2006/130109.

US-A-4,673,496 describes a related pulp sheet take-off apparatus.

From WO-A-2006/130096, a washing arrangement for washing and dewatering cellulose pulp is known.

Patent application WO2006/130093 discloses still one solution for arranging the sealing. There the location of sealing element 11 in relation to drum 1 is radially adjustable by means cylinder member 12, at the tip of which the sealing element is stationary mounted. This, too, is a rigid arrangement that does not provide a possibility for dynamic adjustment during the run or a back-up arrangement that would prevent excess protrusion of the sealing element or excess thrust towards the drum.

Patent application WO 2006/130097A1 discloses still one solution, where seals 9 are articulated connected to a positioning cylinder 10 adjusting their radial position. The solution enables the adaptation of the seal's position via rotation around its longitudinal axis. However, in view of radial motion, the solution is rigid and does provide a possibility for adjusting the seals cross direction profile. The mounting of positioning cylinders 10 enables only radial basic adjustment. It does not offer a possibility for active adaptation in accordance with the motions of the drum during the run.

Neither this nor any of the presented solutions provides a possibility to adjust the radial extension of a sealing element locally with varying intensity and even in the whole length of the sealing element. Neither do they present any satisfactory solution for adjusting the position of the sealing element, i.e. rotatably around its longitudinal axis. In practice the sealing element remains as a whole a rigid element, and it has been difficult to make any required adapting changes especially to its local positioning or shape and position during the run. And neither do they provide means for arranging the sealing element to be able to independently make small adapting adjustment motions to opposite direction for adaptation to varying loading conditions.

An object of the present invention is to provide an improved sealing arrangement which enables adapting adaptable sealing surfaces in relation to each other better than before. To put it more precisely, the present invention relates to a solution, by means of which the supporting of these plate-like sealing elements can be effected easily in an adjustable and in view of drum flexible way so that the sealing element is locally adaptable to changes in the location of the sealing surface and thus the sealing element can improve its sealing function, as well as prevent unnecessary wearing of the surfaces. Also, an object of the invention is to decrease the damage risk of the equipment in unusual running situations.

This object is fulfilled with a method according to the invention, which is characterized in the characterizing part of claim 1. The characteristic features of the method implementing the arrangement of the invention are in their turn disclosed in the characterizing part of claim 6. Additionally, other preferred embodiments of the invention become known in the dependent claims.

Firstly, in the novel solution one or more adjustment members are arranged between the sealing element and its supporting points, by means of which the radial extension of the sealing element towards the drum is locally adjustable. The construction of the sealing element is in its turn such that the form of its sealing surface facing the drum is essentially adaptable locally by means of said adjustment members. Preferably this adjustment is possible along the whole length and width of the sealing element. That is, the member is arranged to support the sealing element at desired points and at desired force in chosen zones of the sealing surface of the sealing element. Specifically the members are arranged on the edge zones of the sealing element in the direction of its width. This way, the location and/or position can be adjusted at desired accuracy at each point of its sealing surface.

According to a feature of the invention, at least one adjustment member is arranged between the sealing element and the supporting means for adapting the cross-section profile and/or longitudinal profile of the sealing element in relation to the sealing surface of the drum so that the distance between the sealing element and the sealing surface is adaptable to the desired size in at least a part of the sealing element's area.

Another characteristic feature of the invention is that also restricting members are arranged for the sealing element, by means of which members a predeterminable maximum value can be set for the protrusion extension of the seatings towards the drum. Thus, the restricting member prevents in its zone of function the sealing element from protruding in the radial direction towards the drum and the sealing surface any further than to the preset maximum limit. However, simultaneously the restricting member is arranged to allow free motion of the sealing element into the opposite direction, i.e. radially outwards.

The contact force between the sealing element and the sealing is preferably arranged to be as small as possible, but nevertheless it must be high enough to resist e.g. the force caused by the pressure of washing water.

The solution according to the invention offers several advantages. By means of the construction according to the invention it is possible to adapt the form of the sealing element precisely in accordance with the drum's forms so that the distance between the sealing element and the sealing surface is and remains as even as possible. This way, the adjustment can be carried out also during the run and thus adapt the radial extension of the sealing towards the drum in relation to changes taking place in the drum and even along the whole area of the sealing element locally. In practice this means at the same time that it is possible to decrease the distance between the sealing element and the sealing surface, and thus to improve the functioning of the sealing itself. The sealing element is nevertheless allowed to move freely to a desired distance away from the drum. This improves the protection of the sealing surfaces from sudden overloading caused by exceptional situations and thus reduces the damage risk of the equipment.

The invention and its preferred embodiments are in the following explained in more detail with reference to the following drawings, of which
- Fig. 1: illustrates a cross-sectional view of a 2-stage drum washer provided in accordance with the present invention, which washer has two washing zones separated from each other,
- Fig. 2: illustrates schematically a cross-sectional view of a detail of a drum washer sealing arrangement according to prior art,
- Fig. 3: is a close-shot of a cross-section of a drum washer sealing arrangement of Fig. 1 at point A in the axial direction of the drum,
- Fig. 4: illustrates a sealing arrangement according to Fig. 3 as a cutaway drawing in the axial direction of the drum washer in accordance with cutting lines B-B and C-C, and
- Fig. 5: is a schematic illustration in perspective view of possibilities offered by the solution according to the invention for adjusting the location and position of the sealing element.

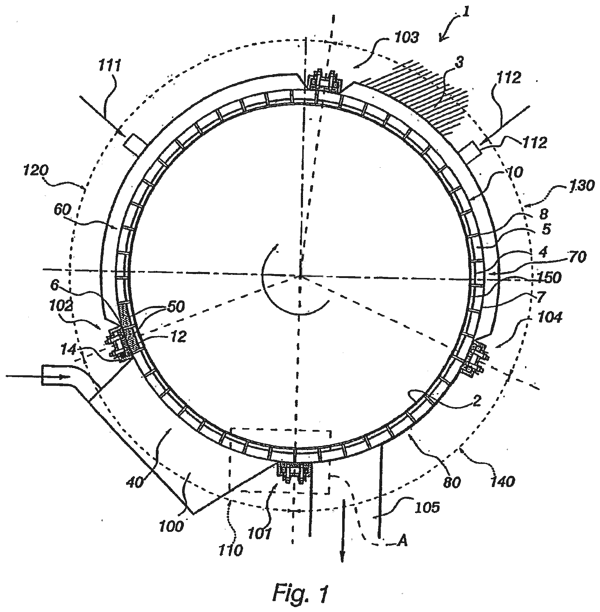

Figure 1 illustrates in cross-sectional view an example of a typical drum washer for washing liquor-containing fiber pulp, which washer is additionally provided with sealing element arrangements according to the invention. Drum 2 that is arranged to rotate symmetrically around its axis is surrounded by a stationary housing part 3. Pulp compartments 5 for the pulp to be washed are arranged on the circumferential surface of the drum, in the circular space 6 formed between the drum 2 and the housing part 3, by means of circumferentially arranged end wall members 7 and intermediate walls 8 extending in the axial direction of the drum. As the drum rotates, these compartment-like chambers perform a circular motion in the space between the drum 2 and the housing part 3.

An individual operational cycle of the drum starts with the feed of fiber suspension into a feed box 100 acting as a pulp feed chamber, wherefrom it is dosed into pulp compartments 5 in the feeding stage 40 in the drum's rotation angle area 110. As the drum rotates in Fig. 1 clock-wise, the fiber pulp in pulp compartment 5 passes, bypassing sealing element arrangement 102 following the feed stage 40, into a first washing stage 60, which is located at the drum's phase angle area marked with reference numeral 120. A sealing element 12 of arrangement 102 simultaneously wipes off excess pulp suspension so that an even pulp cake 50 is formed in the pulp compartments. For clarity, the two pulp cakes evened by the sealing element 12 and filling the pulp compartment 5 are darkened and marked with reference numeral 50 in the figure.

The object of the sealing arrangement 102 is to separate the feeding zone 40 at the pulp feed box from the first zone 60 of the washing stage. More precisely, it is to form a sealing operation between the zones so that the pressure difference prevailing between the zones remains essentially unchanged over the sealing. In other words, the sealing is to ensure that the pressure level difference between two adjacent zones can not cause significant flow of liquid or gaseous material over the sealing. A sealing surface 10 is formed of the radial outer surface of the axial intermediate walls 8 and endwall members 7, or, in other words, of their outer edges. It is also thinkable that an additional coating, construction or corresponding accompaniment is arranged between the radial outer surfaces of the axial intermediate walls 8 and wall members 7 themselves for forming the sealing surface 10.

Although temporary contact may occur between the sealing surface 10 formed of the pulp compartments and the sealing element, in practice there is a small distance between the sealing element 12 and the sealing surface 10. The sealing surface 10 is in practice a plane surface following the form of a cylindrical circumferential surface and having openings formed by the pulp compartments 5. The width of the sealing element is at least similar to that of the distance between two adjacent intermediate walls 8, in order to assure that the sealing functions in the desired way.

In the first washing stage 60, washing liquid is introduced via conduit 111 into fiber pulp in pulp compartments 5. The washing liquid displaces the fouler liquid in the fiber suspension, which is filtered through filtration surface 4 acting as the bottom of the pulp compartment. The liquid is collected from filtrate compartments 150 and discharged from the drum via its end. After passing the next sealing element arrangement 103, the fiber pulp in pulp compartment 5 passes into the next washing stage 70 in phase angle zone 130, where washing liquid is again introduced into the pulp compartments 5 via a conduit 112 and the washing operation is repeated. The drum washer can operate according to counter-current principle, i.e. the filtrate of this stage 70 can in due course act as the washing liquid of the previous washing stage 60. Depending on the washer, the number of washing stages is usually from one to four, in this embodiment, however, for clarity only two. After the last washing stage 70 and sealing arrangement 104 follows a suction stage 80 in phase angle zone 140, where the washed pulp is thickened by means of suction, discharged from the drum via conduit 105 and the compartments 5 are cleaned for a new pulp feed stage 40 after sealing element arrangement 101.

As described in the above, changes in the drum's pressure and temperature levels together with the rotation of the drum cause varying loading forces to the drum construction. The operation of a drum washer is largely based on those pressure differences therein, the main rule being that the pressure outside the filtrate surface 4 is higher than the pressure on the drum side. The pressure level varies also between different washing stages. E.g. this causes small fluctuation of the dimensions of the drum as a whole as the drum rotates. Accordingly, different temperatures of various washing liquids cause changes in the distance between the drum 2 and the housing part 3. The sealing element arrangement 101, 102, 103, 104 should be capable of adapting to these changes and follow the sealing surface 10 formed by the walls of the pulp compartments maintaining as constant a distance as possible.

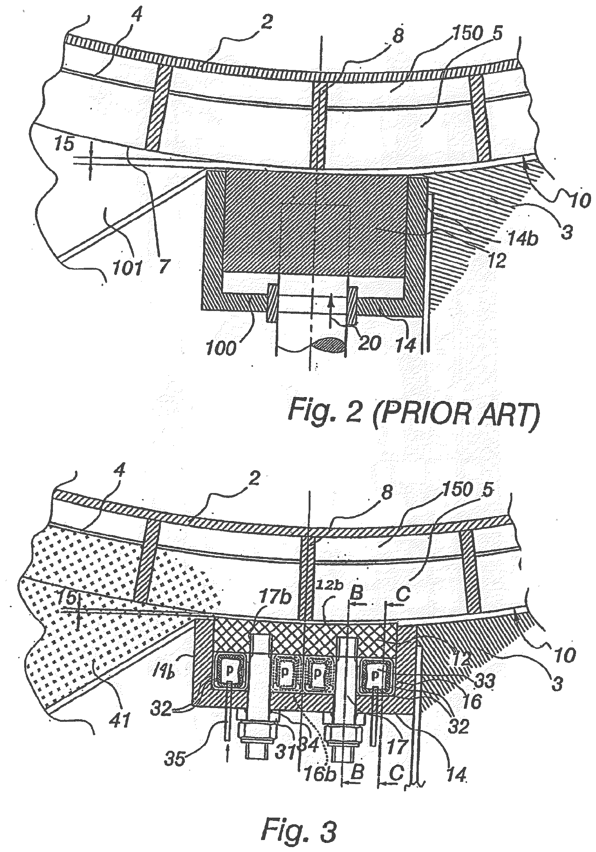

Figure 2 illustrates schematically in close-up in the radial direction and in cross-section an example of a prior art solution for arranging the sealing element 12 to approach the drum of the drum washer, more precisely the sealing surface 10 of the pulp compartments. The outer circumferential surfaces of the intermediate walls 8 extending in the axial direction of the drum 2 and the wall members 7 arranged circumferentially in relation to the drum 2 form a contact surface imitating the form of a cylindrical surface, which contact surface is in this application referred to as sealing surface 10 and against which the sealing element 12 is aligned. The width of the sealing surface 12 is arranged to be that of at least one pulp compartment, i.e. at least that of the distance between two intermediate walls 8, which ensures that at least one intermediate wall 8 is at the element and thus provides an even support to the sealing surface in case actual contact occurs.

The adjustment of the sealing element 12 takes place via a supporting nest 14. The object of the supporting nest 14 is to support the sealing element in the first place in the circumferential direction of the drum. It compensates the tangential force occurring in the circumferential direction caused by possible friction force between the sealing element 12 and the sealing surface 10, so that the sealing element essentially does not move. The tangential supporting of the sealing element 12 is here effected by the long sides 14b of the supporting nest. The radial location, where the sealing element is adapted in relation to sealing surface 10, in its turn, is here adjusted by means of an adjustment unit 100 of the supporting nest, where a support/adjustment rod 20 is rigidly fastened to the element 12. Adjustment units 100 are arranged on the length of the sealing element in the number of two or more.

Although coarse adjustment of the sealing element 12 in the radial direction is possible by means of adjustment units 100, the arrangement as such is very rigid and separate adjustment in the longitudinal direction of the sealing element is not possible, except linearly tilting the sealing element. That is, one end of the sealing element can be adjusted to be lower or higher than the other in radial direction. So, it is impossible to crown the sealing element both in its lateral and longitudinal direction in relation to the drum 2.

Similarly, changes occurring in the form of the drum and thus also in the distance between the sealing element 12 and sealing surface 10 during the run are in practice impossible to totally compensate with this kind of arrangement. Also, there is a risk that e.g. when a foreign object gets between the sealing surfaces, extra loading is directed in excess towards the sealing surface 10 of the pulp compartment. In the solutions of prior this kind of "back-up" operation has typically been effected with mechanical springs between the rods 20 and the frame, which do not necessarily always provide enough flexibility.

Figure 3 illustrates in close-up a cross-section of a detail of a sealing element arrangement according to a highly advantageous embodiment of the present invention, i.e. zone A of figure 1 between the discharge stage 140 and the feed stage 110. At the same time it illustrates feeding of the pulp 41 into the pulp compartments during the feed stage 40. In figure 3, in accordance with the invention, adjustment members 16 are arranged between the supporting means 14 and the sealing element 12, by means of which adjustment members the radial location of the sealing element in relation to the sealing surface 10 of the pulp compartments, i.e. in practice the distance 15 between the sealing surfaces is locally adaptable along the whole length of the sealing element. Figure 3 also illustrates possible additional elements in the lateral direction with reference numeral 16b.

Now the sealing element 12 can be arranged essentially more precisely than before within an even distance 15 from the sealing surface 10. That is, the arrangement facilitates one kind of crowning of the sealing element so that the distance 15 between the sealing element 12 and the sealing surface 10 can be made constant throughout the whole area of the sealing surface 12b of the sealing element. In the embodiment of figure 3, the adjustment member is a cushion profile made of an elastic material, e.g. rubber or corresponding material with flexible properties, or some corresponding member 16 with adjustable volume, which can be operated pneumatically or hydraulically. When pressure is increased or the amount of pressure medium is increased via conduit 35, the volume 33 of the member increases and correspondingly it moves the sealing element at the point in question towards the sealing surface 10.

The adjustment member 16 can be arranged to support the sealing element evenly throughout its whole area, adapting to the radial forces directed towards the sealing element. The adjustment member can preferably be arranged adjustable on one hand so that the force it directs towards the sealing element is locally adjustable. The area of influence of the adjustment member can be kind of divided into subareas, the supporting force of each of which can be adjusted independently. However, in the embodiment of figure 3 there are additionally illustrated supporting members 32 for the cushion profiles, by means of which the cushion members can be supported and the radial direction of movement of the members can be emphasized.

The sealing element 12, in turn, can be formed very plate-like and having a thickness significantly smaller than width, the sealing element preferably being bigger than the distance between two intermediate walls 8 of a pulp compartment. For improving the adaptability of the sealing element it is preferable to form the thickness of the element in relation to its rigidness to be thin enough in order to enable its local adjustment to be as precise as possible independent of the zone of the sealing. On the other hand, as the adjustment members 16 provide good support and improved adaptability for the sealing element, due to the supporting and adjusting method the present invention explicitly enables arranging the sealing element more flexible and/or thinner than earlier.

The sealing element can be formed of metal, plastic or rubber mixture or other prior art sealing material. Unlike earlier, it is now possible to even arrange the sealing element to be formed of a number of layers or of a cover layer and inner layer for achieving the desired flexibility and properties of the outer surface. Similarly, because the fitting to the sealing surface 10 is more precise than earlier and risks of especially local contact that would cause wearing can be avoided, the wearing of the sealing is decreased and is, first and foremost, more even. This creates a possibility to use materials of decreased thickness.

For instance, the element's cover can be arranged to be of a corrosion-resistant material and the inner layer of a cheaper material. The outer surface can be made of a material that is very or even highly wear-resistant, while the inner layer can be made of less resistant material. It is advantageous to form the element "plank-like", with an essentially rectangular cross-section, which provides a further advantage that the element can be replaced or for maintenance removed from the end of the apparatus in the axial direction.

In figure 3, a supporting nest 14, 14b acting as "protecting nest" is arranged to support the sealing element, by means of which the cushion profile is supported, kept in place and protected from external damages also. It is essential that the supporting means 14 provide the sealing element 12 tangential support and also radial support so that it is ensured that the sealing element 12 does not move. The supporting nest or corresponding arrangement is to form supporting points for the sealing so that the sealing does not break and that no significant deformations occur without the possibility for the sealing element to direct loadings directed thereto forward, away from the drum 2.

The adjustment member 16, such as a cushion profile, is preferably located in a dedicated nest-like supporting means 14 that supports the profile and protects it from external damages. Now, the required rigidness of the sealing element can be effected by means of a pneumatic or hydraulic cushion profile made of a flexible material, which supports the element evenly along the whole length. According to an embodiment, the supporting of the element can also be effected mechanically with a specifically designed spring. The plank-like element 12 is here located in a cut that is made for it in the support structure. Lateral support of the element 12 is effected from the long edge of the element to the side wall 14b of the cut, similar to the prior art solution of figure 2. The adjustment of the radial protrusion of the element 12 takes place under the effect of motions of the cushion profile supporting the element.

The adjustment members 16, i.e. in this case e.g. a cushion profile can be arranged along the whole length of the sealing element 12 as one piece or as several separate members, whereby each member can be used independently. A possible arrangement is also such that the adjustment member 16 is divided into parts or items 16b so that the size of each part or area can be adjusted separately and thus adapt the location of the sealing element locally in different parts thereof.

Because the adjustment members 16 arranged for adjusting the sealing element form a construction that is more flexible than earlier, it is even thinkable that adjustments carried out e.g. in crowning can at least partly be effected by means of the supporting means themselves. Thereby, when using the actual adjustment members 16, the emphasis can be on fine adjustment of the sealing element.

Further, figure 3 illustrates another feature that is characteristic for the present invention. The idea of our invention is to simultaneously use restricting members 17, by means of which it is possible to restrict to a desired extent excess motion of the sealing element inwards towards the drum, such that a distance of desired size, preferably in the range of less than 1 mm, always remains between the sealing surface 10 and the sealing elements 12. The adjustment member 16 can in principle be run so that the sealing element 12 is pressed with a desired even force against the drum, i.e. its sealing surface 10, whereby a separate motion restriction would not be needed. Usually the aim is, however, a constant small distance 15 between the sealing surfaces. For preventing excess pressing of the sealing element 12 towards the sealing surface 10, restricting members 17 are now arranged, by means of which the maximum radial motion of the sealing element towards the sealing surface 10 can be restricted along the whole length of the sealing element.

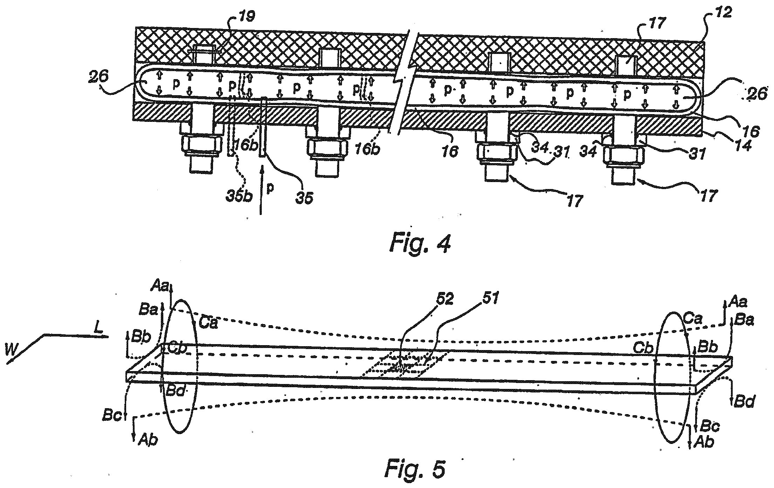

Thus, the members 17 act as kind of motion restrictors. They are preferably located with even spacing along the sealing element in its longitudinal direction, possibly also in the lateral direction of the sealing, such as adjustment members 16. These restricting members 17 provide a clearly better possibility for cambering/crowning the sealing element as needed and even in various directions of motion, such as will be later disclosed in connection with figure 5. This way, various deformations of the drum and its segments occurring during operation can be efficiently compensated. The sealing element can also be adjusted around the longitudinal axis to a right angle, whereby it follows the form of the drum and the sealing surface on its outer surface in the phase angle zone in question.

The member 17 acting as restrictor can at the simplest be just a screw fastened to the sealing element, the radial motion of which, following the sealing element towards the drum is restricted. The screw is at one end fastened to the sealing element by means of a screw joint 17b so that relative motion of the sealing element and the screw is essentially prevented. Similarly in figure 4, the fastening of the restricting members 17 to the sealing element 12 is additionally secured by means of an applicable restraint member, illustrated under reference number 19 as an example. The bottom of the support box 14 is additionally provided with an element 31, the main function of which is to act as a sealing nest. Further, possible sealing elements 34 are marked between the restricting members 17 and 31.

If desired, this application of restricting member 17 can also be automated. By means of it the pressure directed by the sealing element 12 towards the sealing surface 10 can be dynamically adjusted. Also, by means of it the sealing element can also be detached or drawn off from the sealing surface 10. It is essential to notice that essential abrasion contact between the sealing surface 10 and the sealing element 12 is not necessarily meant to be continuous. It is usually desirable that no continuous abrasion contact exists between the sealing surface and sealing element, or the contact would not increase excessively e.g. in exceptional situations. For instance, if a foreign object passes between sealing element 12 and sealing surface 10, these members yield at that point of the sealing element ensuring that compression or friction forces between the sealing surfaces and the foreign object cannot increase excessively.

Figure 4 illustrates the embodiment of figure 3 as a longitudinal partial cut of the sealing element 12 in the axial direction of the drum in accordance with cutting lines B-B and C-C. It illustrates especially well the possibility of the solution according to the invention to simultaneous crowning of the sealing element in its longitudinal direction. This is further illustrated in figure 5, which shows various adjustment directions or methods that are possible for the sealing elements position. The radial movement of sealing element 12 towards sealing surface 10 can in the arrangement according to the invention be adjusted as desired along the whole length of the sealing element, as well along the whole width. In the similar embodiment of the figure the cushion profile 16 is formed of one piece. At the same time, only one inlet conduit 35 is arranged for pressure medium.

It is to be noticed that the support nest 14 illustrated in figures 3 and 4 need not necessarily be a nest-like or a continuous support piece, but it can be effected in many other ways and it can comprise several parts. E.g. the illustrated cushion profile between the sealing element 12 and the support nest 14 can also be formed of several separate cushion profiles. Similarly, the profile 16 can be formed of one piece but so that separate pressure sections are arranged inside the cushion profile, as illustrated with intermediate walls 16b, whereby adjustment element sections are formed, which are marked with reference numeral 26 and which can be used independently of other sections, if needed and which have an inlet conduit 35b for pressure medium. This way the size of the profile and thus the radial movement of sealing element 12 and the supporting force directed upon it can be adjusted as desired along the length of the whole sealing element 12 locally, i.e. essentially independently of how it is wished to adjust the other zones of the sealing element.

Instead of the above described screw like member 17, the restricting member can naturally be another force-distributing member appropriately connected to the sealing element, by means of which a desired maximum value can be set for the radial extension of the sealing element and which nevertheless also allow free motion of the sealing element radially outwards. Instead of a combination of a screw and a bolt, also e.g. eccentric rolls or wedges or gearwheels can be used. In this kind of situations, the motion restrictors of successive sealing elements can be connected to each other via an adjusting rod. In the solution of figure 4 a suitable spring element or corresponding adjustment element (not shown) can be arranged between the adjustment bolt and the support nest 14, which also makes it possible to equalize the pressure between the sealing element and the sealing surface.

Figure 5 still illustrates the possibility offered by the invention to adjust the position and location of the sealing element in different ways. By means of the system according to the invention it is e.g. possible to locally adjust the position and location of a certain zone of the sealing element 12 independently of the location or position of the other zones of the sealing element. This illustrated by means of zone 51 marked in dash lines. There the location of the area of the sealing surface of the sealing element 12 corresponding to an individual zone 52, which for clarity is shadowed and the shape and size of which can naturally be chosen by arranging the adjustment means 16, can be adjusted separately. This adjustment possibility is created especially by forming the adjustment members for the sealing element 12 both in the longitudinal direction L and the lateral direction W of the sealing element to several independently adjusted parts or as a number of separate units, each of which can be adjusted independently of other adjustment members 16 or their independent units. So, these individual adaptable adjustment zones of the sealing element 12 form a kind of mat, in which mat each individual zone 52 of the sealing surface 12b of the sealing element forms an individual adjustable sealing surface unit. Possibilities for adjustment of the position and location of the sealing element that are made possible by this kind of adjustment arrangement for the sealing element are illustrated in the figures by arrows and dash lines marked with references Aa-Cb.

Although the sealing element 12 in figure 5 is for clarity illustrated as an essentially plane straight plate-like element, its form as manufactured or at the latest when mounted is preferably adapted to be such that at least the sealing surface of the sealing element that faces the sealing surface 10 is slightly concave in the direction of its width. In this way it follows the form of the sealing surface 10 as precisely as possible and allows the distance 15 to remain as even as possible. This concavity is illustrated with arrows Bd and Bc. This crowning of the sealing element in the direction of width can in the system according to the invention be adjusted along the whole length of the sealing element. Correspondingly, the same kind of crowning can be effected also in the longitudinal direction, such as illustrated with arrows Aa and Ab. Further, the sealing element can simultaneously be rotated in relation to its longitudinal axis in various directions, as illustrated with arrows Ca and Cb. These possibilities to adjust various directions of motion allow adapting the position and location of the sealing element 12 in relation to the sealing surface 10 for each point of the sealing element.

## Claims

1. A method for improving the operation and/or adjustability of sealing elements (12) of a drum washer (1) for washing fiber suspension, which drum washer (1) comprises a cylindrical drum (2) arranged to be rotatable around its longitudinal axis and adapted inside a stationary housing construction (3), outside which drum pulp compartments (5) are arranged for the fiber suspension to be washed, where the pulp compartments (5) are formed on the outer surface of the drum (2) by means of wall members (7) arranged essentially circumferentially and intermediate walls (8) arranged essentially in the direction of the axis (9) of the drum (2), whereby the radial outer surfaces of said wall members (7) and intermediate walls (8) form a sealing surface (10) for the pulp compartments,
in which drum washer (1) the pulp compartments (5) can be divided into sectorial zones separated from each other, said zones comprising at least one feed zone (40 for feeding the fiber suspension, one or more washing zones (60, 70) for washing the fiber suspension and at least one discharge zone (80) for discharging the fiber suspension,
in which drum washer (1) said sealing elements (12) are adapted in a space (6) formed between the housing part (3) and the drum (2) and extend essentially in the direction of the longitudinal axis of the drum (2), for which sealing elements (12) supporting means (14) are arranged against which supporting means the sealing elements (12) can be supported, and which sealing elements (12) are arranged towards the sealing surface (10) for the pulp compartments so that said zones (40, 60, 70, 80) can be formed by means of the sealing elements (12), and
at least one adjustment member 16) is arranged between the sealing element (12) and the supporting means (14) for adapting the sealing element (12) in relation to the sealing surface (10) of the drum so that the distance (15) between the sealing element (12) and the sealing surface (10) is at least on a part of the sealing element's (12) area adaptable to a desired size,
**characterized in that**
the number of adjustment members (16, 16b) arranged for each sealing element (12) is two or more in the lateral direction of the drum, or the adjustment member (16) is arranged to operate as two or more parts (26) adjustable independently of each other in the lateral direction of the drum, so as to provide for an adjustment of the sealing element (12) in its lateral direction in relation to the drum (2),
wherein restricting members (17) are additionally arranged in connection with the supporting means (14), by means of which restricting members the maximum extension of the sealing element (12) towards the sealing surface (10) is adaptable to a desired size at least on a part of the sealing element's (12) area and which restricting members (17) are arranged to allow the motion of the sealing element (12) away from the drum (2).

2. A method according to claim 1, wherein the adjustment members (16) are provided with adaptable spring elements that transfer at least the main part of the radial supporting force of the sealing element (12).

3. A method according to any one of claims 1 and 2, wherein one or more members (16) with pneumatically and/or hydraulically adaptable volume is used as the adjustment member.

4. A method according to any one of claims 1-3, wherein the sealing element (12) is adjusted to be in contact with the sealing surface (10).

5. A method according to claim 4, wherein the contact force between the sealing element (12) and the sealing surface is arranged to correspond to a pressure in the range of 0.1-500 kPa, preferably 0.1-100 kPa.

6. An arrangement for improving the operation and/or adaptability of sealing elements (12) of a drum washer (1) for washing fiber suspension, said drum washer (1) comprising a cylindrical drum (2) arranged to be rotatable around its longitudinal axis and adapted inside a stationary housing construction (3), outside which drum pulp compartments (5) are arranged for the fiber suspension to be washed,
in which drum washer (1) the walls of the pulp compartments are formed on the outer surface of the drum (2) by means of wall members (7) arranged essentially circumferentially and intermediate walls (8) arranged essentially in the direction of the axis (9) of the drum (2), whereby the radial outer surfaces of said wall members (7) and intermediate walls (8) form a sealing surface (10) for the pulp compartments,
in which drum washer (1) the pulp compartments (5) can be divided into sectorial zones separated from each other, comprising at least one feed zone (40) for feeding the fiber suspension, one or more washing zones (60, 70) for washing the fiber suspension and at least one discharge zone (80) for discharging the fiber suspension, in which drum washer (1) said sealing elements (12) are adapted in a space (6) formed between the housing part (3) and the drum (2) and extend essentially in the direction of the longitudinal axis of the drum (2), and for which sealing element (12) supporting means (14) are arranged, against which the sealing element (12) can be supported and which sealing elements (12) are arranged towards the sealing surface (10) for the pulp compartments so that said zones (40, 60, 70, 80) can be formed by means of the sealing elements (12), and
at least one adjustment member (16) is arranged between the sealing element (12) and the supporting means (14) so that the distance between the sealing element (12) and the sealing surface (10) is adaptable to a desired size at least on a part of the sealing element's (12) area,
**characterized in that**
the number of adjustment members (16) arranged for each sealing element (12) is two or more in the lateral direction of the drum, or the adjustment member (16) is arranged to operate as two or more parts (26) adjustable independently of each other in the lateral direction of the drum, so as to provide for an adjustment of the sealing element (12) in its lateral direction in relation to the drum (2),
wherein restricting members (17) are additionally arranged in connection with the supporting means (14), by means of which restricting members the maximum extension of the sealing element (12) towards the sealing surface (10) is adaptable to a desired size at least on a part of the sealing element's (12) area and which restricting members (17) are arranged to allow the motion of the sealing element (12) away from the drum (2).

7. An arrangement according to claim 6, wherein the adjustment members (16) are provided with adaptable spring elements that transfer at least the main part of the radial supporting force of the sealing element (12).

8. An arrangement according to any one of claims 6 and 7, wherein the adjustment member is one or more member/s (16) with pneumatically or hydraulically adjustable volume.

9. An arrangement according to any one of claims 6-8, wherein said member is a cushion profile (16).

10. An arrangement according to any one of claims 6-9, wherein the sealing element (12) is adjusted to be in contact with the sealing surface (10).

11. An arrangement according to any one of claims 6-10, wherein the contact force between the sealing element (12) and the sealing surface is arranged to correspond to a pressure in the range of 0.1-500 kPa, preferably 0.1-100 kPa.

## Patentansprüche

1. Verfahren zum Verbessern des Betriebs und/oder der Anpassbarkeit von Dichtelementen (12) einer Waschtrommel (1) zum Waschen einer Fasersuspension, wobei die Waschtrommel (1) eine zylindrische Trommel (2) aufweist, die ausgestaltet ist, um deren Längsachse rotierbar zu sein, und in eine stationäre Gehäusekonstruktion (3) eingepasst ist, wobei außerhalb der Trommel Zellstoffabteile (5) zum Waschen der Fasersuspension angeordnet sind, und die Zellstoffabteile (5) an der äußeren Fläche der Trommel (2) durch Wandelemente (7), welche im Wesentlichen umlaufend angeordnet sind, und Zwischenwände (8) ausgebildet sind, welche im Wesentlichen in Richtung der Achse (9) der Trommel (2) angeordnet sind, wobei die radialen äußeren Flächen der Wandelemente (7) und Zwischenwände (8) eine Dichtungsfläche (10) für die Zellstoffabteile ausbilden, und
in der Waschtrommel (1) die Zellstoffabteile (5) in Sektorzonen unterteilt werden können, welche voneinander getrennt sind, die Zonen mindestens eine Zuführzone (40) zum Zuführen der Fasersuspension, eine oder mehrere Waschzonen (60, 70) zum Waschen der Fasersuspension und mindestens eine Ausgabezone (80) zum Ausgeben der Fasersuspension aufweisen,
in der Waschtrommel (1) die Dichtelemente (12) in einen Raum (6) eingepasst sind, der zwischen dem Gehäuseteil (3) und der Trommel (2) ausgebildet ist und sich im Wesentlichen in Richtung der Längsachse der Trommel (2) erstreckt, für die Dichtelemente (12) Stützmittel (14) angeordnet sind, wobei die Dichtelemente (12) gegen die Stützmittel abstützbar sind, und die Dichtelemente (12) in Richtung der Dichtungsfläche (10) für die Zellstoffabteile ausgerichtet sind, sodass die Zonen (40, 60, 70, 80) durch die Dichtelemente (12) ausgebildet werden können, und
mindestens ein Anpassungselement (16) zwischen dem Dichtelement (12) und dem Stützmittel (14) zum Anpassen des Dichtelements (12) in Bezug auf die Dichtungsfläche (10) der Trommel vorgesehen ist, sodass der Abstand (15) zwischen dem Dichtelement (12) und der Dichtungsfläche (10) zumindest in einem Teil der Dichtelementfläche (12) an eine angestrebte Größe anpassbar ist,
**dadurch gekennzeichnet, dass**
die Anzahl von Anpassungselementen (16, 16b), die für jedes Dichtelement (12) vorgesehen ist, zwei oder mehr in der Querrichtung der Trommel beträgt, oder das Anpassungselement (16) ausgestaltet ist, als zwei oder mehr Teile (26) zu arbeiten, welche unabhängig voneinander in die Querrichtung der Trommel anpassbar sind, sodass eine Anpassung des Dichtelements (12) in dessen Querrichtung in Bezug auf die Trommel (2) bereitgestellt wird,
wobei Beschränkungselemente (17) zusätzlich in Verbindung mit dem Stützmittel (14) vorgesehen sind, wobei durch die Beschränkungselemente die maximale Erstreckung des Dichtelements (12) in Richtung der Dichtungsfläche (10) zumindest in einem Teil der Dichtelementfläche (12) auf eine angestrebte Größe anpassbar ist, und die Beschränkungselemente (17) angeordnet sind, die Bewegung des Dichtelements (12) weg von der Trommel (2) zu ermöglichen.

2. Verfahren nach Anspruch 1, wobei die Anpassungselemente (16) mit anpassbaren Federelementen versehen sind, welche zumindest den Hauptteil der radialen Stützkraft des Dichtelements (12) übertragen.

3. Verfahren nach einem der Ansprüche 1 und 2, wobei ein oder mehrere Elemente (16) mit pneumatisch und/oder hydraulisch anpassbarem Volumen als Anpassungselement verwendet werden.

4. Verfahren nach einem der Ansprüche 1-3, wobei das Dichtelement (12) angepasst ist, in Kontakt mit der Dichtungsfläche (10) zu sein.

5. Verfahren nach Anspruch 4, wobei die Kontaktkraft zwischen dem Dichtelement (12) und der Dichtungsfläche ausgestaltet ist, einem Druck in dem Bereich von 0,1-500 kPa, vorzugsweise 0,1-100 kPa, zu entsprechen.

6. Anordnung zum Verbessern des Betriebs und/oder der Anpassbarkeit von Dichtelementen (12) einer Waschtrommel (1) zum Waschen einer Fasersuspension, wobei die Waschtrommel (1) eine zylindrische Trommel (2) aufweist, die um deren Längsachse rotierbar ausgestaltet ist und in eine stationäre Gehäusekonstruktion (3) eingepasst ist, wobei außerhalb der Trommel Zellstoffabteile (5) zum Waschen der Fasersuspension angeordnet sind,
in der Waschtrommel (1) die Wände der Zellstoffabteile auf der äußeren Fläche der Trommel (2) durch Wandelemente (7), welche im Wesentlichen umlaufend angeordnet sind, und Zwischenwände (8) ausgebildet sind, welche im Wesentlichen in Richtung der Achse (9) der Trommel (2) angeordnet sind, wobei die radialen äußeren Flächen der Wandelemente (7) und Zwischenwände (8) eine Dichtungsfläche (10) für die Zellstoffabteile ausbilden,
in der Waschtrommel (1) die Zellstoffabteile (5) in Sektorzonen, welche voneinander getrennt sind, unterteilt werden können, welche mindestens eine Zuführzone (40) zum Zuführen der Fasersuspension, eine oder mehrere Waschzonen (60, 70) zum Waschen der Fasersuspension und mindestens eine Ausgabezone (80) zum Ausgeben der Fasersuspension aufweisen, wobei in der Waschtrommel (1) die Dichtelemente (12) in einen Raum (6) eingepasst sind, der zwischen dem Gehäuseteil (3) und der Trommel (2) ausgebildet ist und sich im Wesentlichen in Richtung der Längsachse der Trommel (2) erstreckt, und für das Dichtelement (12) ein Stützmittel (14) angeordnet ist, gegen welches das Dichtelement (12) abgestützt werden kann, und die Dichtelemente (12) in Richtung der Dichtungsfläche (10) für die Zellstoffabteile angeordnet sind, sodass die Zonen (40, 60, 70, 80) durch die Dichtelemente (12) ausgebildet werden können, und
mindestens ein Anpassungselement (16) zwischen dem Dichtelement (12) und dem Stützmittel (14) so vorgesehen ist, dass der Abstand zwischen dem Dichtelement (12) und der Dichtungsfläche (10) zumindest in einem Teil der Dichtelementfläche (12) auf eine angestrebte Größe anpassbar ist,
**dadurch gekennzeichnet, dass**
die Anzahl von Anpassungselementen (16), welche für jedes Dichtelement (12) vorgesehen ist, zwei oder mehr in der Querrichtung der Trommel beträgt, oder das Anpassungselement (16) ausgestaltet ist, als zwei oder mehr Teile (26) zu arbeiten, welche unabhängig voneinander in die Querrichtung der Trommel anpassbar sind, sodass eine Anpassung des Dichtelements (12) in dessen Querrichtung in Bezug auf die Trommel (2) bereitgestellt wird,
wobei Beschränkungselemente (17) zusätzlich in Verbindung mit dem Stützmittel (14) vorgesehen sind, wobei durch die Beschränkungselemente die maximale Ausdehnung des Dichtelements (12) in Richtung der Dichtungsfläche (10) zumindest in einem Teil der Dichtelementfläche (12) auf eine angestrebte Größe anpassbar ist, und die Beschränkungselemente (17) angeordnet sind, die Bewegung des Dichtelements (12) weg von der Trommel (2) zu ermöglichen.

7. Anordnung nach Anspruch 6, wobei die Anpassungselemente (16) mit anpassbaren Federelementen versehen sind, die zumindest den Hauptteil der radialen Stützkraft des Dichtelements (12) übertragen.

8. Anordnung nach einem der Ansprüche 6 und 7, wobei das Anpassungselement ein oder mehrere Elemente (16) mit pneumatisch oder hydraulisch anpassbarem Volumen ist.

9. Anordnung nach einem der Ansprüche 6-8, wobei das Element ein Pufferprofil (16) ist.

10. Anordnung nach einem der Ansprüche 6-9, wobei das Dichtelement (12) anpassbar ist, um in Kontakt mit der Dichtungsfläche (10) zu sein.

11. Anordnung nach einem der Ansprüche 6-10, wobei die Kontaktkraft zwischen dem Dichtelement (12) und der Dichtungsfläche ausgestaltet ist, einem Druck in dem Bereich von 0,1-500 kPa, vorzugsweise 0,1-100 kPa, zu entsprechen.

## Revendications

1. Procédé permettant d'améliorer le fonctionnement et/ou la capacité de réglage d'éléments d'étanchéité (12) d'un tambour laveur (1) destiné à laver une suspension de fibres, lequel tambour laveur (1) comprend un tambour cylindrique (2) agencé de manière à pouvoir tourner autour de son axe longitudinal et adapté à l'intérieur d'une structure de boîtier fixe (3), à l'extérieur duquel tambour des compartiments à pâte (5) sont agencés pour la suspension de fibres à laver, où les compartiments à pâte (5) sont formés sur la surface externe du tambour (2) au moyen d'éléments de paroi (7) agencés de manière essentiellement circonférentielle et de parois intermédiaires (8) agencées essentiellement dans la direction de l'axe (9) du tambour (2), moyennant quoi les surfaces externes radiales desdits éléments de paroi (7) et parois intermédiaires (8) forment une surface d'étanchéité (10) pour les compartiments à pâte,
dans lequel tambour laveur (1) les compartiments à pâte (5) peuvent être divisés en zones sectorielles séparées les unes des autres, lesdites zones comprenant au moins une zone d'alimentation (40) destinée à alimenter la suspension de fibres, une ou plusieurs zone(s) de lavage (60, 70) destinée(s) à laver la suspension de fibres et au moins une zone de décharge (80) destinée à décharger la suspension de fibres,
dans lequel tambour laveur (1) lesdits éléments d'étanchéité (12) sont adaptés dans un espace (6) formé entre la partie de boîtier (3) et le tambour (2) et s'étendent essentiellement dans la direction de l'axe longitudinal du tambour (2), pour lesquels éléments d'étanchéité (12) des moyens de support (14) sont agencés, contre lesquels moyens de support les éléments d'étanchéité (12) peuvent être supportés, et lesquels éléments d'étanchéité (12) sont agencés vers la surface d'étanchéité (10) pour les compartiments à pâte de manière à ce que lesdites zones (40, 60, 70, 80) puissent être formées au moyen des éléments d'étanchéité (12), et
au moins un élément de réglage (16) est agencé entre l'élément d'étanchéité (12) et les moyens de support (14) pour adapter l'élément d'étanchéité (12) par rapport à la surface d'étanchéité (10) du tambour de manière à ce que la distance (15) entre l'élément d'étanchéité (12) et la surface d'étanchéité (10) puisse, au moins sur une partie de la zone de l'élément d'étanchéité (12), s'adapter à une taille souhaitée,
**caractérisé en ce que**
le nombre d'éléments de réglage (16, 16b) agencés pour chaque élément d'étanchéité (12) est deux ou plus dans la direction latérale du tambour, ou l'élément de réglage (16) est agencé pour fonctionner en tant que deux ou plusieurs parties (26) pouvant être réglées l'une/les unes indépendamment de l'autre/des autres dans la direction latérale du tambour, afin de fournir un réglage de l'élément d'étanchéité (12) dans sa direction latérale par rapport au tambour (2),
dans lequel des éléments de restriction (17) sont en outre agencés en liaison avec les moyens de support (14), au moyen desquels éléments de restriction, l'extension maximale de l'élément d'étanchéité (12) vers la surface d'étanchéité (10) peut s'adapter à une taille souhaitée au moins sur une partie de la zone de l'élément d'étanchéité (12) et lesquels éléments de restriction (17) sont agencés pour permettre le déplacement de l'élément d'étanchéité (12) loin du tambour (2).

2. Procédé selon la revendication 1, dans lequel les éléments de réglage (16) sont pourvus d'éléments de ressort adaptables qui transfèrent au moins la partie principale de la force d'appui radiale de l'élément d'étanchéité (12).

3. Procédé selon l'une quelconque des revendications 1 et 2, dans lequel un ou plusieurs élément(s) (16) à volume capable de s'adapter pneumatiquement et/ou hydrauliquement est/sont utilisé(s) comme étant l'élément de réglage.

4. Procédé selon l'une quelconque des revendications 1-3, dans lequel l'élément d'étanchéité (12) est réglé pour venir en contact avec la surface d'étanchéité (10).

5. Procédé selon la revendication 4, dans lequel la force de contact entre l'élément d'étanchéité (12) et la surface d'étanchéité est agencée de manière à correspondre à une pression dans la plage allant de de 0,1 à 500 kPa, de préférence de 0,1 à 100 kPa.

6. Agencement permettant d'améliorer le fonctionnement et/ou l'adaptabilité d'éléments d'étanchéité (12) d'un tambour laveur (1) destiné à laver une suspension de fibres, ledit tambour laveur (1) comprenant un tambour cylindrique (2) agencé de manière à pouvoir tourner autour de son axe longitudinal et adapté à l'intérieur d'une structure de boîtier fixe (3), à l'extérieur duquel tambour des compartiments à pâte (5) sont agencés pour la suspension de fibres à laver,
dans lequel tambour laveur (1) les parois des compartiments à pâte sont formées sur la surface externe du tambour (2) au moyen d'éléments de paroi (7) agencés de manière essentiellement circonférentielle et de parois intermédiaires (8) agencées essentiellement dans la direction de l'axe (9) du tambour (2), moyennant quoi les surfaces externes radiales desdits éléments de paroi (7) et parois intermédiaires (8) forment une surface d'étanchéité (10) pour les compartiments à pâte,
dans lequel tambour laveur (1) les compartiments à pâte (5) peuvent être divisés en zones sectorielles séparées les unes des autres, comprenant au moins une zone d'alimentation (40) destinée à alimenter la suspension de fibres, une ou plusieurs zone(s) de lavage (60, 70) destinée(s) à laver la suspension de fibres et au moins une zone de décharge (80) destinée à décharger la suspension de fibres, dans lequel tambour laveur (1) lesdits éléments d'étanchéité (12) sont adaptés dans un espace (6) formé entre la partie de boîtier (3) et le tambour (2) et s'étendent essentiellement dans la direction de l'axe longitudinal du tambour (2), et pour lequel élément d'étanchéité (12) des moyens de support (14) sont agencés, contre lesquels l'élément d'étanchéité (12) peut être supporté et lesquels éléments d'étanchéité (12) sont agencés vers la surface d'étanchéité (10) pour les compartiments à pâte de manière à ce que lesdites zones (40, 60, 70, 80) puissent être formées au moyen des éléments d'étanchéité (12), et
au moins un élément de réglage (16) est agencé entre l'élément d'étanchéité (12) et les moyens de support (14) de manière à ce que la distance entre l'élément d'étanchéité (12) et la surface d'étanchéité (10) puisse s'adapter à une taille souhaitée au moins sur une partie de la zone de l'élément d'étanchéité (12),
**caractérisé en ce que**
le nombre d'éléments de réglage (16) agencés pour chaque élément d'étanchéité (12) est deux ou plus dans la direction latérale du tambour, ou l'élément de réglage (16) est agencé pour fonctionner en tant que deux ou plusieurs parties (26) pouvant être réglées l'une/les unes indépendamment de l'autre/des autres dans la direction latérale du tambour, afin de fournir un réglage de l'élément d'étanchéité (12) dans sa direction latérale par rapport au tambour (2).
dans lequel des éléments de restriction (17) sont en outre agencés en liaison avec les moyens de support (14), au moyen desquels éléments de restriction, l'extension maximale de l'élément d'étanchéité (12) vers la surface d'étanchéité (10) peut s'adapter à une taille souhaitée au moins sur une partie de la zone de l'élément d'étanchéité (12) et lesquels éléments de restriction (17) sont agencés pour permettre le déplacement de l'élément d'étanchéité (12) loin du tambour (2).

7. Agencement selon la revendication 6, dans lequel les éléments de réglage (16) sont pourvus d'éléments de ressort adaptables qui transfèrent au moins la partie principale de la force d'appui radiale de l'élément d'étanchéité (12).

8. Agencement selon l'une quelconque des revendications 6 et 7, dans lequel l'élément de réglage représente un ou plusieurs élément(s) (16) à volume capable d'être réglé pneumatiquement ou hydrauliquement.

9. Agencement selon l'une quelconque des revendications 6-8, dans lequel ledit élément est un profil de coussin (16).

10. Agencement selon l'une quelconque des revendications 6-9, dans lequel l'élément d'étanchéité (12) est réglé de manière à venir en contact avec la surface d'étanchéité (10).

11. Agencement selon l'une quelconque des revendications 6-10, dans lequel la force de contact entre l'élément d'étanchéité (12) et la surface d'étanchéité est agencée de manière à correspondre à une pression dans la plage allant de 0,1 à 500 kPa, de préférence de 0,1 à 100 kPa.
